# EUROPÄISCHE PATENTANMELDUNG

(11) **EP 2 615 312 A1**
(43) Veröffentlichungstag der Anmeldung: **17.07.2013**
(21) Anmeldenummer: 12198566.7
(22) Anmeldetag: 20.12.2012
(51) Int. Cl.: F16B 2/20, F16B 5/06, F16B 9/02, F16L 5/00, F24C 15/16

(54) **Lagerbuchse, welche zum Lagern eines Haushaltsgerätebauteils an einer Haushaltsgerätekomponente ausgebildet ist, sowie Haushaltsgerät mit einer derartigen Lagerbuchse**

(30) Priorität: 11.01.2012 DE 102012200316
(71) Anmelder: BSH Bosch und Siemens Hausgeräte GmbH, 81739 München (DE)
(72) Erfinder: Nather, Philipp, 83026 Rosenheim (DE)

(57) **Zusammenfassung**

Die Erfindung betrifft eine Lagerbuchse (18, 19), welche zum Lagern eines Haushaltsgerätebauteils (20) an einer Haushaltsgerätekomponente (8) ausgebildet ist, und die Lagerbuchse (18, 19) einen hinteren Verbindungsbereich (23) zum Einführen in eine Aussparung (14 bis 17) in der Haushaltsgerätekomponente (8) aufweist, an den frontseitig ein Anlageflansch (21) zum Anschlagen an einer Oberseite der Haushaltsgerätekomponente (8) ausgebildet ist, wobei der Verbindungsbereich (23) ein relativ zum Anlageflansch (21) bewegbares Aufnahmeelement (28) aufweist, welches eine Öffnung (29) zum Hindurchführen und Halten des Haushaltsgerätebauteils (20) aufweist. Die Erfindung betrifft auch ein Haushaltsgerät (1) mit einer Lagerbuchse (18, 19).

## Beschreibung

Die Erfindung betrifft eine Lagerbuchse, welche zum Lagern eines Haushaltsgerätebauteils an einer Haushaltsgerätekomponente ausgebildet ist. Die Lagerbuchse weist einen hinteren Verbindungsbereich zum Einführen in eine Aussparung in der Haushaltsgerätekomponente auf. An diesem Verbindungsbereich ist frontseitig ein Anlageflansch als Anschlag an die Oberseite der Haushaltsgerätekomponente ausgebildet. Des Weiteren betrifft die Erfindung ein Haushaltsgerät zumindest mit einer derartigen Lagerbuchse.

Bei bekannten Backöfen sind an einer Innenseite einer Muffel, welche einen Garraum begrenzt, Lagerbuchsen angeordnet, die zur Aufnahme von Traggestellen, auf denen ein Gargutträger aufgebracht werden kann, ausgebildet sind. Bei gegenwärtigen Lagerbuchsen ist der Verbindungsbereich lediglich zum Hindurchstecken durch die Aussparung vorgesehen. Zur Befestigung dieser Lagerbuchse an einer Muffelwand sind zusätzliche separate Bauteile, wie beispielsweise Haltefedern und dergleichen erforderlich. Dadurch wird zum einen die Bauteilzahl erhöht und die Montage erheblich aufwendig.

Es ist Aufgabe der vorliegenden Erfindung, eine Lagerbuchse zu schaffen, welche einfach und sicher befestigt werden kann. Darüber hinaus ist es Aufgabe, ein Haushaltsgerät mit einer derartigen Lagerbuchse zu schaffen.

Diese Aufgaben werden durch eine Lagerbuchse und ein Haushaltsgerät gemäß den unabhängigen Ansprüchen gelöst.

Eine erfindungsgemäße Lagerbuchse ist zum Lagern eines Haushaltsgerätebauteils an einer Haushaltsgerätekomponente ausgebildet. Die Lagerbuchse weist einen hinteren Verbindungsbereich zum Einführen in eine Aussparung in der Haushaltsgerätekomponente auf. An diesen Verbindungsbereich schließt frontseitig ein Anschlageflansch zum Anschlag an einer Oberseite der Haushaltsgerätekomponente an. Der Verbindungsbereich weist ein relativ zum Anlageflansch bewegbares Aufnahmeelement auf, welches eine Öffnung zum Hindurchführen und Halten des Haushaltsgerätebauteils aufweist. Durch eine derartige Ausgestaltung kann eine gewisse Flexibilität der Lagerbuchse, insbesondere von Komponenten davon, erreicht werden. Die Lagerbuchse ist in ihrem Verbindungsbereich somit derart gestaltet, dass durch dieses Aufnahmeelement vorteilhafterweise eine gewisse Verwindung und Bewegbarkeit erreicht ist, die Bewegungen in horizontaler und vertikaler Richtung zulässt. Dadurch können übertragene Kräfte, die sich aufgrund einer Bewegung der Haushaltsgerätebauteile relativ zur Lagerbuchse ergeben, aufgefangen und derart auch aufgenommen werden, dass die restlichen Bestandteile der Lagerbuchse nicht unerwünscht mit einer derartigen Kraft beaufschlagt werden und somit eine Beschädigung dieser weiteren Teile der Lagerbuchse verhindert werden kann.

Dies ist ein wesentlicher Vorteil gegenüber bekannten Ausführungen, bei denen derartige Lagerbuchsen mit zusätzlichen separaten Bauteilen, beispielsweise in Form von Blechfedern, an der Haushaltsgerätekomponente befestigt werden. In diese Lagerbuchsen wird dann das Haushaltsgerätebauteil eingeführt und gelagert. Dabei wird durch eine Art Schlüssellochprinzip das Haushaltsgerätebauteil, welches beispielsweise ein Einhängegitter für einen Gargutträger bei einem Gargerät ist, in dem Buchsensystem fixiert. Die Enden dieser Haushaltsgerätebauteile haben insbesondere eine spezifische Codierung in Form von Hinterschneidungen oder dergleichen, sodass sie entsprechend in die Buchse eingebracht werden können. Der Einschub dieses Einhängegitters erfolgt dabei zunächst horizontal in die hintere Lagerbuchse, die beispielsweise an einer seitlichen Muffelwand einer den Garraum begrenzenden Muffel eines Gargeräts angeordnet ist. Anschließend erfolgt dann das Einführen dieses Einhängegitters vertikal in eine vordere Lagerbuchse.

Ein wesentliches Problem der bekannten Ausgestaltung mit einer Lagerbuchse und einer zusätzlichen Feder als separates Bauteil ist darin zu sehen, dass durch das spezielle Montageprinzip die hintere Lagerbuchse sehr oft zerbrochen wird und teure Reparaturen die Folge sind. Dies liegt insbesondere daran, dass bei der Demontage durch einen Nutzer in der Regel die vordere Lagerbuchse richtig vertikal nach oben entriegelt wird, dann aber nur versucht wird, das Gitter aus der hinteren Lagerbuchse herauszuziehen.

Da das Einhängegitter mit dem Schlüssellochprinzip jedoch in der hinteren Lagerbuchse fest verankert ist, entsteht eine Drehbewegung und ein direktes Drehmoment wirkt auf die hintere Lagerbuchse. Die Tiefe des Einhängegitters wirkt dabei wie ein Hebel, was zur Folge hat, dass die hintere Lagerbuchse reißt oder bricht. Dies trifft insbesondere bei Buchsen aus Keramik zu.

Bei Lagerbuchsen aus einem Blechmaterial ist bei diesen bekannten Ausgestaltungen oftmals das Problem aufgetreten, dass durch das genannte Drehmoment ein Aufbiegen bzw. Verbiegen erfolgt und die Lagerbuchse ausgeleiert ist. Eine weitere sichere und positionsfixierte Anbringung ist dann nicht mehr gegeben.

Da bei den bekannten Lagerbuchsen die Komponenten dieser Buchse starr und bewegungsunflexibel sind, treten die genannten Probleme auf.

Durch die erfindungsgemäße Lagerbuchse werden genau diese Probleme unterbunden und eine ganz spezifische integrierte Teileinheit der Lagerbuchse, nämlich das bewegbare Aufnahmeelement, ermöglicht es durch seine Relativbewegung gegenüber den anderen Teilen der Lagerbuchse, die genannten Probleme zu verhindern.

Vorzugsweise ist vorgesehen, dass das Aufnahmeelement als gewinkelte Zunge ausgebildet ist. Dadurch kann ihre Bewegbarkeit in spezifische Richtungen verbessert werden.

Vorzugsweise ist vorgesehen, dass das Aufnahmeelement einseitig mit dem Anlageflansch verbunden ist. Die Bewegungselastizität ist dadurch nochmals verbessert und durch die nur einseitige Anbindung eine besonders leichtgängige Federung erreicht. Insbesondere die Bewegbarkeit in zwei Raumrichtungen, was auch in Kombination zu einer leicht verdrillten Bewegungsmöglichkeit führen kann, ist dadurch reversibel und dauerhaft gewährleistbar, ohne dass eine dauerhafte plastische Verformung auftreten würde.

Vorzugsweise ist vorgesehen, dass das Aufnahmeelement mit einer ersten Längsseite an dem Auflageflansch angebunden ist und mit dem gegenüberliegenden Ende unangebunden angeordnet ist. Die oben genannten Vorteile im Hinblick auf flexible Bewegung und Bewegungsmöglichkeit in mehreren Freiheitsgraden sind dadurch nochmals verbessert.

Vorzugweise ist vorgesehen, dass die Zunge einen ersten schräg nach hinten stehenden Zungenabschnitt aufweist, der mit dem Anlageflansch verbunden ist, und einen in einem Winkel dazu angeordneten zweiten Zungenabschnitt aufweist, der beabstandet und schräg zum Anlageflansch angeordnet ist. Durch eine derartige Ausgestaltung und Anbindung des Aufnahmeelements kann genau denjenigen Situationen in besonderem Maße Rechnung getragen werden, in welchen das eingreifende Haushaltsgerätebauteil in den oben genannten Szenarien in die spezifischen Richtungen bewegt wird, sodass dadurch in die entsprechenden Richtungen Kräfte auftreten, die durch diese Formgebung und Anbindung des Aufnahmeelements in besonderem Maße aufgenommen und abgeleitet werden können, ohne dass die anderen Teile der Lagerbuchse beschädigt würden.

Vorzugsweise ist vorgesehen, dass die Öffnung in dem Aufnahmeelement sich zu einem unangebundenen Ende des Aufnahmeelements aufweitend ausbildet. Das Einführen des Haushaltsgerätebauteils einerseits in diese Öffnung als auch das entsprechende Bewegen des Haushaltsgerätebauteils in dieser Öffnung andererseits ist dadurch dahingehend vorteilhaft erreicht, dass keine unerwünschten Kraftbeaufschlagungen erfolgen.

Vorzugsweise ist vorgesehen, dass die Öffnung in dem Aufnahmeelement an einem unangebundenen Ende des Aufnahmeelements offen ausgebildet ist. Der zweite Zungenabschnitt ist dadurch quasi durch zwei beabstandet und parallel zueinander verlaufende Zungenlappen bzw. Zungenstege gebildet, die an ihren freien Enden nicht miteinander verbunden sind. Die Bewegungsfreiheit der Zunge ist dadurch entsprechend verbessert.

Vorzugsweise ist vorgesehen, dass an dem Verbindungsbereich zwei Halteelemente integral ausgebildet sind, welche zur selbsthaltenden Positionsfixierung der Lagerbuchse in der Aussparung ausgebildet sind.

Insbesondere sind die Halteelemente integral an der Lagerbuchse ausgebildet. Das Halteelement ist insbesondere so konzipiert, dass es insbesondere eine axiale Positionsfixierung der Lagerbuchse an der Hausgerätekomponente ermöglicht.

Es kann somit vorzugsweise eine einstückige Lagerbuchse geschaffen werden, welche einfach und aufwandsarm und dennoch sehr positionssicher in der Aussparung anbringbar ist. Die Lagerbuchse ist durch das integrale Halteelement somit quasi selbsthaltend in der Aussparung positionierbar. Zusätzliche weitere Komponenten zur Befestigung der Lagerbuchse in der Aussparung, wie beispielsweise separate Federn oder dergleichen, sind hier nicht mehr erforderlich.

Das Halteelement ist vorzugsweise relativ zum Verbindungsbereich bewegbar an dem Verbindungsbereich ausgebildet. Insbesondere ist das Halteelement federnd an dem Verbindungsbereich angeordnet. Durch diese Bewegbarkeit kann eine gewisse Flexibilität des Halteelements erreicht werden, sodass insbesondere auch vorteilhafte Montageabläufe erzielt werden können.

Vorzugsweise ist das Halteelement schräg in Richtung des Anlageflansches orientiert an dem Verbindungsbereich angeordnet. Durch eine derartige Ausgestaltung ergibt sich insbesondere mit der Ausführung des bewegbar angeordneten Halteelements ein definiertes Widerhakensystem, welches in die Aussparung hintergreifend positioniert werden kann. Insbesondere die axiale Positionsfixierung der Lagerbuchse in der Aussparung kann dadurch besonders zuverlässig und dauerhaft erreicht werden.

Insbesondere ist ein Halteelement als zungenförmiges Einschnappelement ausgebildet.

Vorzugsweise ist vorgesehen, dass das Halteelement als Anschlag an einer Rückseite der Haushaltsgerätekomponente im verbauten Zustand der Lagerbuchse ausgebildet ist. Die oben genannten Vorteile im Hinblick auf die insbesondere axiale Positionsfixierung können dadurch nochmals begünstigt werden. Darüber hinaus kann durch das Halteelement ein mechanisch stabiles Bauteil direkt anliegend an der Rückseite positioniert werden. Unerwünschte Verschiebungen oder unerwünschte Montagetoleranzen können dadurch vermieden werden. Darüber hinaus kann gerade dann, wenn ein Halteelement eine gewisse Bewegbarkeit und Flexibilität aufweist, auch automatisch ein Toleranzausgleich in der Positionierung erreicht werden. Vorzugsweise ist die Lagerbuchse einstückig ausgebildet. Sie kann dabei aus Metall ausgestaltet sein.

Die Lagerbuchse weist eine durchgängige Öffnung auf, die sich in axialer Richtung erstreckt. Die Öffnung ist zur Aufnahme und Durchführung eines Teilbereichs des Haushaltsgerätebauteils ausgebildet.

Vorzugsweise ist vorgesehen, dass das Aufnahmeelement zwischen den beiden Halteelementen angeordnet ist. Dadurch ist auch ein gewisser Schutz für das Aufnahmeelement erreicht. Nicht zuletzt ist durch eine derartige Ausgestaltung mit zwei Halteelementen auch eine gewisse Symmetrie gegeben, die die axiale Positionssicherung einerseits begünstigt, andererseits auch eine gewisse Verkippung oder Verdrehung verhindert.

Vorzugsweise ist vorgesehen, dass der Anlageflansch eine durchgängige Öffnung aufweist, welche zur Aufnahme und Durchführung eines Teilbereichs des Haushaltsgerätebauteils ausgebildet ist, wobei die Öffnung fluchtend mit der Öffnung in dem Aufnahmeelement ausgebildet ist. Insbesondere ist der zweite Zungenabschnitt der Zunge, der auch die Öffnung in dem Aufnahmeelement aufweist, beabstandet zu dem Anlageflansch angeordnet, sodass auch eine beabstandete Anordnung zur Öffnung in dem Anlageflansch ausgebildet ist.

Des Weiteren betrifft die Erfindung ein Haushaltsgerät zum Zubereiten von Lebensmitteln, mit einer Muffel, welche eine Seitenwand aufweist, in welcher eine Aussparung ausgebildet ist, wobei in dieser Aussparung eine erfindungsgemäße Lagerbuchse oder eine vorteilhafte Ausgestaltung davon angeordnet ist. In die Lagerbuchse ist ein Traggestell für einen Gargutträger und/oder ein Auszugsystem einsetzbar, wobei das Traggestell oder das Auszugsystem ein Haushaltsgerätebauteil darstellen.

Die Muffel ist insbesondere die Haushaltsgerätekomponente.

Durch die erfindungsgemäße Lagerbuchse erfolgt die Aufhängung des Haushaltsgerätebauteils, insbesondere eines Einhängegitters, nicht wie gewohnt in einem fest verankerten Teil, sondern in einer Art flexibler Blechzunge, die das Aufnahmeelement in spezifischer Ausführung darstellt. Sofern dann mit einer Kraft am Gitter in den Innenraum des Garraums gezogen wird, ist die Aufhängung fixiert, da diese Zunge gegen die Buchseninnenwand stößt. Das Aufnahmeelement stößt somit an den Anlageflansch an. Dabei ist diese Zunge möglichst geringfügig von dem Anlageflansch entfernt, sodass sich beim Einstecken eine Art Gegenzug einstellt. Dadurch werden anfallende Toleranzen sehr gut ausgeglichen. Beim Herausziehen jedoch kann dieses Aufnahmeelement der Bewegung begrenzt folgen und stellt sich schräg. Da dieses Aufnahmeelement ohnehin etwas schräg konstruiert ist, wird mit dieser zusätzlichen Bewegung die Schräge entsprechend verstärkt und fördert das Ausgleiten des Einhängegitters aufgrund des Schlüssellochprinzips. Vorzugsweise ist diese Lagerbuchse aus Edelstahlblech gebildet.

Durch die erfindungsgemäße Lagerbuchse oder eine vorteilhafte Ausgestaltung davon kann eine relativ kostengünstige und wenig reparaturanfällige Ausgestaltung geschaffen werden. Darüber hinaus ist sie mechanisch stabil und hoch beanspruchbar. Durch die Ausgestaltung ist auch ein vollständiges Ein- und Ausführen des Haushaltsgerätebauteils unterstützt.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ein Ausführungsbeispiel der Erfindung wird nachfolgend anhand schematischer Zeichnungen näher erläutert. Es zeigen:
- Fig. 1: eine vereinfachte perspektivische Darstellung eines Ausführungsbeispiels eines erfindungsgemäßen Haushaltsgeräts;
- Fig. 2: eine perspektivische Darstellung eines Teilausschnitts des Haushaltsgeräts gemäß Fig. 1;
- Fig. 3: eine perspektivische erste Seitenansicht eines Ausführungsbeispiels einer erfindungsgemäßen Lagerbuchse;
- Fig. 4: eine zweite perspektivische Darstellung der Lagerbuchse gemäß Fig. 3;
- Fig. 5: eine Darstellung der Lagerbuchse gemäß Fig. 4 mit eingeführtem Haushaltsgerätebauteil;
- Fig. 6: eine weitere Darstellung der Ausführung gemäß Fig. 5 mit umfänglicherer Komponentendarstellung;
- Fig. 7: eine Draufsicht auf die Ausführung gemäß Fig. 6; und
- Fig. 8: eine weitere perspektivische Darstellung der Ausführung gemäß Fig. 6.

In den Figuren werden gleiche oder funktionsgleiche Elementen mit den gleichen Bezugszeichen versehen.

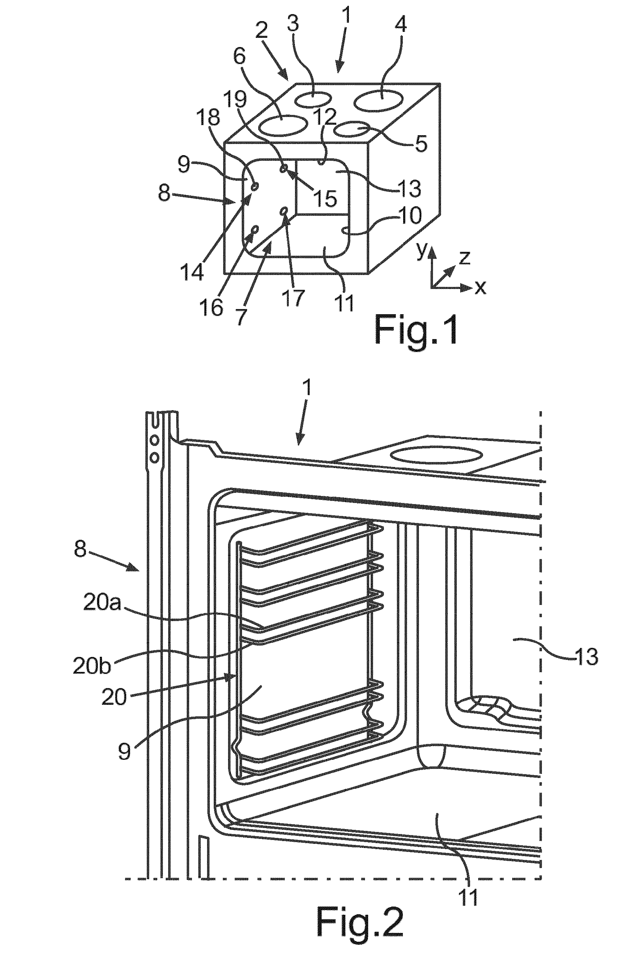

In Fig. 1 ist in einer schematischen Darstellung ein als Backofen 1 ausgebildetes Haushaltsgerät zum Zubereiten von Lebensmitteln gezeigt. Der Backofen 1 umfasst ein Kochfeld 2 mit vier Kochzonen 3, 4, 5 und 6, die in Form und Anzahl lediglich beispielhaft zu verstehen sind. Das Kochfeld 2 ist ebenfalls eine optionale Ausgestaltung des Backofens 1. Darüber hinaus umfasst der Backofen 1 einen Garraum 7, welcher durch eine Muffel 8 begrenzt ist. Die Muffel 8 umfasst vertikale Seitenwände 9 und 10 sowie eine Bodenwand 11, eine Deckenwand 12 und eine Rückwand 13. Der Garraum 7 ist frontseitig durch eine nicht gezeigte Tür verschließbar und umfasst darüber eine nicht gezeigte Bedienvorrichtung, welche Bedienelemente und eine Anzeigeeinheit aufweisen kann.

An einer Innenseite der vertikalen Seitenwände 9 und 10 sind Aussparungen 14, 15, 16 und 17 ausgebildet. Sowohl die Anzahl als auch die Position der Aussparungen 14 bis 17 ist lediglich beispielhaft und darüber hinaus sind in der gegenüberliegenden vertikalen Seitenwand 10 in entsprechender Höhe und entsprechender Anzahl entsprechende Öffnungen als Aussparungen ausgebildet. In die Aussparungen 14 bis 17 sind Lagerbuchsen eingebracht, von denen lediglich die Lagerbuchsen 18 und 19 mit Bezugszeichen versehen sind. Diese Lagerbuchsen 18 und 19 sind in vertikaler Richtung (y-Richtung) auf gleichem Höhenniveau angebracht. Die Lagerbuchsen 18 und 19 sind zur Aufnahme des nicht gezeigten Traggestells ausgebildet. Das als Haushaltsgerätebauteil ausgebildete Traggestell bzw. Einhängegitter 20 (Fig. 2) kann ein Gargutträger, wie er in Fig. 2 gezeigt ist, und/oder ein Schienenauszugssystem sein. Ist ein Schienenauszugssystem vorhanden, kann auf diesem der Gargutträger positioniert werden und aus dem Garraum 7 damit herausgezogen und eingeschoben werden.

Die Lagerbuchse 18 stellt dabei die vordere Lagerbuchse dar, wobei die Lagerbuchse 19 die hintere darstellt.

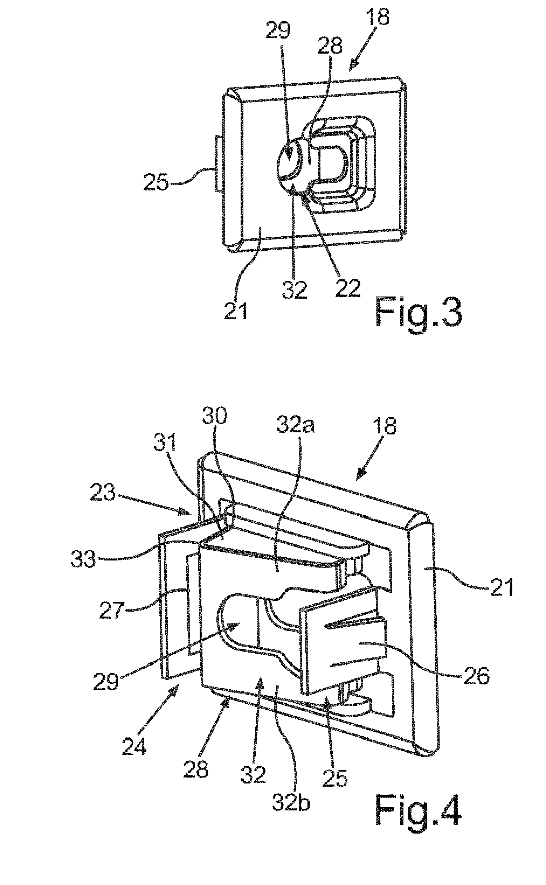

In Fig. 3 ist in einer ersten perspektivischen Darstellung ein Ausführungsbeispiel der Lagerbuchse 18 gezeigt. Diese ist im Ausführungsbeispiel stellvertretend auch für die Lagerbuchse 19 im Weiteren erläutert.

Die Lagerbuchse 18 umfasst einen Anlageflansch 21, der eine Öffnung 22 aufweist. Durch diese Öffnung 22 kann ein Teilbereich des Haushaltsgerätebauteils in Form des Einhängegitters 20 hindurchgeführt werden. Insbesondere wird dabei ein freies Ende eines Führungsstabs 20a oder 20b (Fig. 2) hindurch gesteckt.

In Fig. 4 ist in einer weiteren perspektivischen Darstellung die Lagerbuchse 18 von hinten gezeigt. Nach hinten anschließend an den frontseitigen Anlageflansch ist ein Verbindungsbereich 23 ausgebildet.

Die Lagerbuchse 18 ist insbesondere einstückig ausgebildet. Wie aus der Darstellung in Fig. 4 zu erkennen ist, umfasst der Verbindungsbereich 23 zwei nach hinten abstehende Flügel 24 und 25. Diese sind parallel zueinander orientiert. In jedem dieser Flügel 24, 25 ist jeweils ein laschenartiges Halteelement 26 bzw. 27 ausgebildet, welche schräg nach außen orientiert angeordnet sind. Die beiden integral ausgebildeten Halteelemente 26 und 27 sind plattenförmige Zungen, die im montierten Zustand der Lagerbuchse 18 an der Wand 9 und insbesondere in der Aussparung 14 verrasten und eine axiale Positionssicherung der Lagerbuchse 18 gewährleisten.

Darüber hinaus umfasst der Verbindungsbereich 23 ein relativ zum Anlageflansch 18 bewegbares Aufnahmeelement 28, welches ebenfalls eine Öffnung 29 aufweist, durch welche ein Hindurchführen und Halten des auch durch die Öffnung 22 hindurchgeführten Teilstücks des Haushaltsgerätebauteils in Form des Einhängegitters 20 ermöglicht ist.

Wie aus der Darstellung in Fig. 4 zu erkennen ist, ist das Aufnahmeelement 28 als gewinkelte Zunge ausgebildet. Das Aufnahmeelement 28 ist darüber hinaus auch nur einseitig mit dem Anlageflansch 21 fest verbunden. Diese Verbindung ist an einem Ende 30 ausgebildet. Das Ende 30 ist dabei einem ersten Zungenabschnitt 31 zugehörig, welcher vom Anlageflansch 21 schräg gestellt nach hinten orientiert ist. Er ist somit auch schräg gestellt gegenüber dem Flügel 24 angeordnet. Mit diesem ersten Zungenabschnitt 31 ist ein zweiter Zungenabschnitt 32 verbunden, wobei hier die Verbindung an dem dem Ende 30 gegenüberliegenden Ende 33 vorgesehen ist.

Das Aufnahmeelement 28 ist somit mit einer ersten Längsseite, die dem Ende 30 entspricht, an dem Anlageflansch 21 angebunden, und mit dem gegenüberliegenden Ende unangebunden und somit freiliegend angeordnet. Der zweite Zungenabschnitt 32 ist somit in einem Winkel, der insbesondere zwischen 50° und 80°, vorzugsweise zwischen 50° und 70° beträgt, gegenüber dem Anlageflansch 21 schräggestellt angeordnet.

Im Ausführungsbeispiel ist vorgesehen, dass der auch plattenartige zweite Zungenabschnitt 32 aus zwei streifenförmigen Stegen 32a und 32b gestaltet ist. Dies ergibt sich dadurch, da die Öffnung 29 zu einem dem ersten Zungenabschnitt 31 abgewandten Ende des zweiten Zungenabschnitts 32 offen ausgebildet ist und darüber hinaus auch sich diesbezüglich aufweitend ausgestaltet.

Die Öffnung 29 ist somit so gestaltet, dass sie sich zu einem unangebundenen Ende des Aufnahmeelements 28 und somit zu einem unangebundenen Ende des zweiten Zungenabschnitts 32 aufweitend ausbildet.

Darüber hinaus ist das Aufnahmeelement 28 zwischen den beiden Flügeln 24 und 25 angeordnet. Durch diese Ausgestaltung des Aufnahmeelements 28 ist dieses sowohl in Richtung zum Anlageflansch 21 hin bewegbar, als auch gegenüber der Ebene, in der sich der Anlageflansch 21 erstreckt, verdrehbar und verkippbar. Das Aufnahmeelement 28 ist im Ausführungsbeispiel als aus Edelstahl ausgebildete Blechzunge gestaltet.

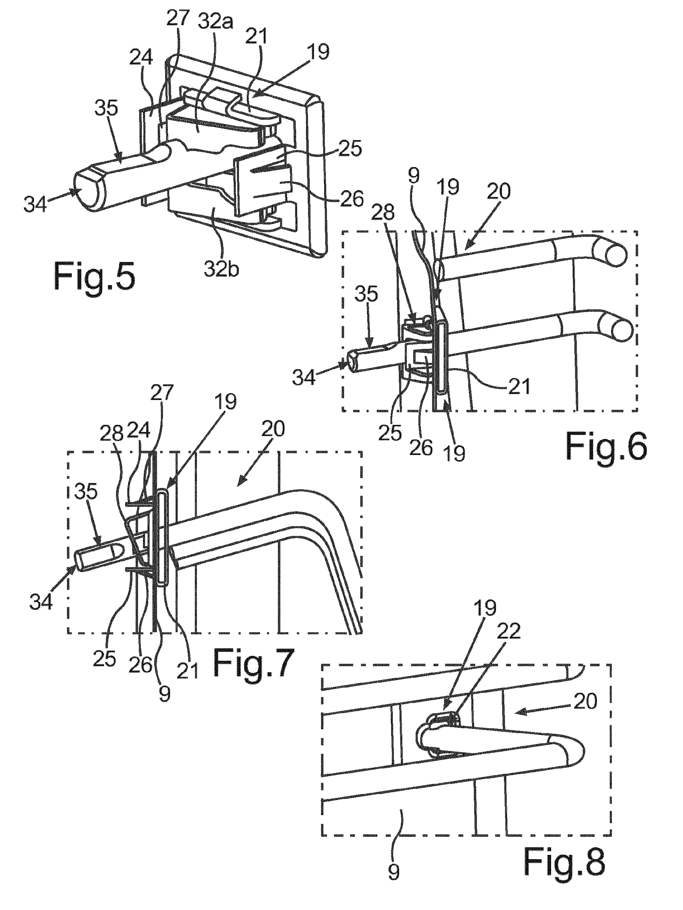

In Fig. 5 ist in einer perspektivischen Darstellung die Ausführung gemäß Fig. 3 und Fig. 4 der Lagerbuchse 18 gezeigt, wobei hier das Einhängegitter 20 durch die Öffnungen 22 und 29 hindurchgeführt ist. Wie aus der Darstellung in Fig. 5 zu erkennen ist, ist ein hinteres Ende 34 eines Stabs des Einhängegitters 20 mit einer spezifischen Formgebung 35 ausgebildet, die eine Codierung zur Realisierung des Schlüssellochprinzips ermöglicht. Dieses gewährleistet in Kombination mit den Formgebungen der Öffnungen 22 und 29 ein sicheres und definiertes Einführen.

In Fig. 6 ist in einer weiteren perspektivischen Darstellung analog zu Fig. 5 das Einhängegitter 20 in umfänglicher Darstellung gezeigt. Auch dann, wenn somit beim Montieren oder Demontieren das Einhängegitter 20 beispielsweise leicht nach oben angestellt wird, kann dies durch die Bewegungsmitführung und flexible Bewegbarkeit des Aufnahmeelements 28 mit aufgenommen und mit durchgeführt werden, und die weiteren Teile der Lagerbuchse 18 bzw. 19 werden nicht entsprechend belastet und nicht unerwünscht verformt, da das Schlüssellochprinzip und somit die direkte Kontaktierung des Stabs nur mit der Öffnung 29 des Aufnahmeelements 28 gegeben ist, und bei der Öffnung 22 dies nicht zutrifft.

In Fig. 7 ist in einer Draufsicht auf die Darstellung gemäß Fig. 5 und Fig. 6 eine Situation gezeigt, bei der das Gitter 20 in der x-z-Ebene (Fig. 1) bewegt ist, insbesondere nach hinten in Richtung zur Rückwand 13 gekippt ist. Auch dies ist hier durch die Ausgestaltung der Lagerbuchse 18 bzw. 19 unkritisch, da durch die Verformbarkeit und Bewegungsflexibilität des Aufnahmeelements 28 dies aufgefangen wird. Im Hinblick auf die Lagerbuchsen 18 und 19 sind die Erläuterungen identisch und auch der Aufbau identisch, sodass für die Einzelbauteile der Lagerbuchsen 18 und 19 die identischen Bezugszeichen vergeben sind.

In Fig. 8 ist eine weitere perspektivische Darstellung gezeigt, bei der die Ausführung in Fig. 6 auf die Wand 9 blickend gezeigt ist.

### Bezugszeichenliste

- 1: Backofen
- 2: Kochfeld
- 3, 4, 5, 6: Kochzonen
- 7: Garraum
- 8: Muffel
- 9, 10: Seitenwände
- 11: Bodenwand
- 12: Deckenwand
- 13: Rückwand
- 14, 15, 16, 17: Aussparungen
- 18, 19: Lagerbuchsen
- 20: Einhängegitter
- 20a, 20b: Führungsstab
- 21: Anlageflansch
- 22: Öffnung
- 23: Verbindungsbereich
- 24, 25: Flügel
- 26, 27: Halteelement
- 28: Aufnahmeelement
- 29: Öffnung
- 30: Ende
- 31: erster Zungenabschnitt
- 32: zweiter Zungenabschnitt
- 32a, 32b: Stege
- 33: Ende
- 34: Ende
- 35: Formgebung

## Patentansprüche

1. Lagerbuchse (18, 19), welche zum Lagern eines Haushaltsgerätebauteils (20) an einer Haushaltsgerätekomponente (8) ausgebildet ist, und die Lagerbuchse (18, 19) einen hinteren Verbindungsbereich (23) zum Einführen in eine Aussparung (14 bis 17) in der Haushaltsgerätekomponente (8) aufweist, an den frontseitig ein Anlageflansch (21) zum Anschlagen an einer Oberseite der Haushaltsgerätekomponente (8) ausgebildet ist, **dadurch gekennzeichnet, dass** der Verbindungsbereich (23) ein relativ zum Anlageflansch (21) bewegbares Aufnahmeelement (28) aufweist, welches eine Öffnung (29) zum Hindurchführen und Halten des Haushaltsgerätebauteils (20) aufweist.

2. Lagerbuchse (18, 19) nach Anspruch 1, **dadurch gekennzeichnet, dass** das Aufnahmeelement (28) als gewinkelte Zunge ausgebildet ist.

3. Lagerbuchse (18, 19) nach Anspruch 1 oder 2, **dadurch gekennzeichnet, dass** das Aufnahmeelement (28) einseitig mit dem Anlageflansch (21) verbunden ist.

4. Lagerbuchse (18, 19) nach Anspruch 3, **dadurch gekennzeichnet, dass** das Aufnahmeelement (28) mit einer ersten Längsseite (30) an dem Auflageflansch (21) angebunden ist und mit dem gegenüberliegenden Ende unangebunden angeordnet ist.

5. Lagerbuchse (18, 19) nach Anspruch 2, **dadurch gekennzeichnet, dass** die Zunge einen ersten schräg nach hinten stehenden Zungenabschnitt (31) aufweist, der mit dem Anlageflansch (21) verbunden ist, und einen in einem Winkel zum ersten Zungenabschnitt (31) angeordneten und damit verbundenen zweiten Zungenabschnitt (32) aufweist, der beabstandet und schräg zum Anlageflansch (21) angeordnet ist.

6. Lagerbuchse (18, 19) nach einem der vorhergehenden Ansprüche, **dadurch gekennzeichnet, dass** die Öffnung (29) in dem Aufnahmeelement (28) sich zu einem unangebundenen Ende des Aufnahmeelements (28) aufweitend ausbildet.

7. Lagerbuchse (18, 19) nach einem der vorhergehenden Ansprüche, **dadurch gekennzeichnet, dass** die Öffnung (29) in dem Aufnahmeelement (28) an einem unangebundenen Ende des Aufnahmeelements (28) offen ausgebildet ist.

8. Lagerbuchse (18, 19) nach einem der vorhergehenden Ansprüche, **dadurch gekennzeichnet, dass** an dem Verbindungsbereich (23) zwei Halteelemente (26, 27) integral ausgebildet sind, welche zur selbsthaltenden Positionsfixierung der Lagerbuchse (18, 19) in der Aussparung (14 bis 17) ausgebildet sind.

9. Lagerbuchse (18, 19) nach Anspruch 8, **dadurch gekennzeichnet, dass** das Aufnahmeelement (28) zwischen den beiden Halteelementen (26, 27) angeordnet ist.

10. Lagerbuchse (18, 19) nach einem der vorhergehenden Ansprüche, **dadurch gekennzeichnet, dass** der Anlageflansch (21) eine durchgängige Öffnung (22) aufweist, welche zur Aufnahme und Durchführung eines Teilbereichs des Haushaltsgerätebauteils (20) ausgebildet ist, wobei die Öffnung (22) fluchtend mit der Öffnung (29) in dem Aufnahmeelement (28) ausgebildet ist.

11. Haushaltsgerät (1) zum Zubereiten von Lebensmitteln, mit einer Muffel (8), welche eine Seitenwand (9, 10) aufweist, in welcher eine Aussparung (14 bis 17) ausgebildet ist, in welcher eine Lagerbuchse (18, 19) nach einem der vorhergehenden Ansprüche angeordnet ist.

12. Haushaltsgerät (1) nach Anspruch 11, **dadurch gekennzeichnet, dass** in die Lagerbuchse (18, 19) ein Einhängegitter (20) für einen Gargutträger und/oder ein Auszugssystem als Haushaltsgerätebauteil einsetzbar ist.

13. Haushaltsgerät (1) nach einem der vorhergehenden Ansprüche, **dadurch gekennzeichnet, dass** die Haushaltsgerätekomponente eine Muffel (8) eines Backofens ist.
